# EUROPEAN PATENT SPECIFICATION

(11) **EP 1 259 020 B1**
(45) Date of publication and mention of the grant of the patent: **10.08.2005**
(21) Application number: 02253320.2
(22) Date of filing: 13.05.2002
(51) Int. Cl.: H04L 5/14, H04L 27/26

(54) **Method of intelligently restricting symbol size in adsl modems**
Verfahren zur Einschränkung der Symbollänge für ADSL-modems
Méthode pour limiter la longueur de symbole pour modem LPNA

(30) Priority: 18.05.2001 US 292230 P; 15.06.2001 US 882100
(43) Date of publication of application: 20.11.2002
(73) Proprietor: Broadcom Corporation, Irvine, California 92618 (US)
(72) Inventor: Carlson, Arthur J., Nevada City, California (US)
(74) Representative: Jehle, Volker Armin, Dipl.-Ing.

(56) References cited:
- EP-A- 1 087 586

## Description

### BACKGROUND OF THE INVENTION

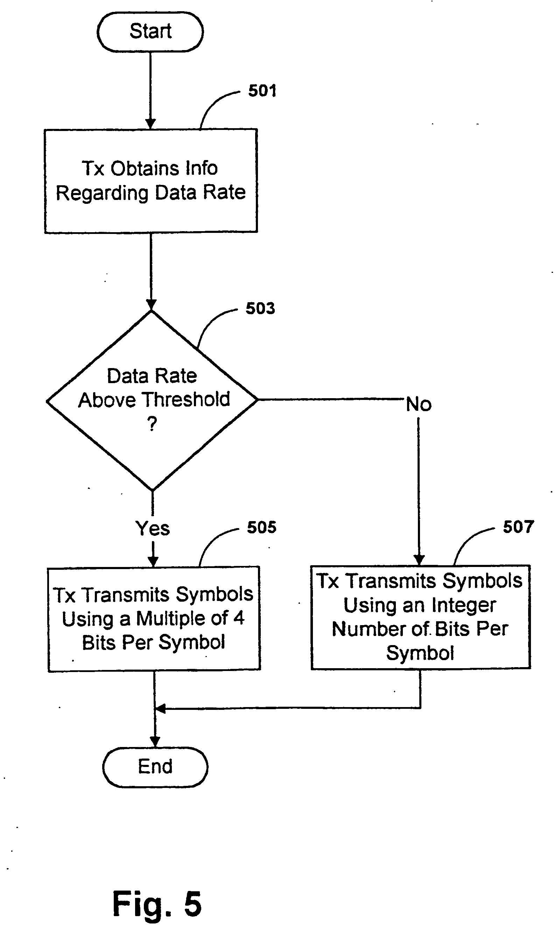

In current ADSL systems (i.e., those using the G.992.1 and G.992.2 standard), data processing is byte oriented (i.e., octet-oriented). In other words, all of the bit-level processing in both the fast and interleaved transmit data paths of such systems is performed in groups of 8. The 8-bit bytes from both paths are combined and inserted into symbols in the Tone ordering block. (Cf. Fig. 5-1 in G.992.1.) Therefore, the number of bits per symbol in current systems always is a multiple of 8. One problem with such systems is that some data capacity is wasted because of the inherent 8-bit data restriction.

More particularly, ADSL modems transmit at a rate of 4000 symbols per second. In the worst case, for example, seven unnecessary bits per symbol must be transmitted, thus requiring the system to support 28,000 bits per second of unnecessary capacity. This excess required capacity is a significant percentage of the overall data capacity at low data rates.

As an alternative, it has been proposed in forthcoming revisions to the current standards that the total number of bits, L, per symbol be allowed to be any integer (i.e., arbitrary), rather than simply a multiple of 8. While this proposed alternative addresses the excess data carrying capacity problem mentioned above, it introduces its own associated problems.

More specifically, implementing bit oriented processing, particularly at high data rates, is very expensive. The additional expense generally comes in the form of additional processor cycles and associated power consumption for software implementations, or in the form of additional silicon real estate and associated power consumption in hardware implementations. In either case, the additional expense ultimately affects the cost of the product.

Further limitations and disadvantages of conventional and traditional approaches will become apparent to one of skill in the art, through comparison of such systems with the present invention as set forth in the remainder of the present application with reference to the drawings.

The European Patent Application EP 1 087 586 discloses a prior art method for bit loading in ADSL environments.

### BRIEF SUMMARY OF THE INVENTION

Aspects of the present invention may be found in a method of restricting symbol size in an ADSL system. Information is obtained regarding the data rate during initialization. This information is then compared to a threshold. If the information is determined to be above the threshold, symbols are transmitted using one of a multiple of 8, 4 or 2 number of bits per symbol. If the information is determined to be below the threshold, symbols are transmitted using an integer number of bits per symbol.

The information obtained regarding the data rate may be received from a remote location, and may comprise, for example, an estimated maximum receive data rate. In one embodiment, the threshold used may be approximately 1 Mbits per second or approximately 250 Kbits per second, for example. In this case, the symbols may be transmitted using a multiple of 8 bits per symbol if the estimated maximum receive data rate is above the threshold.

In another embodiment, the threshold used may be approximately 2 Mbits per second or approximately 500 Kbits per second, for example. In this case, the symbols may be transmitted using a multiple of 4 bits per symbol if the estimated maximum receive data rate is above the threshold.

In still a further embodiment, the threshold used may be approximately 3 Mbits per second or approximately 750 Kbits per second, for example. In this case, the symbols may be transmitted using a multiple of 2 bits per symbol if the estimated maximum receive data rate is above the threshold.

These and other advantages and novel features of the present invention, as well as details of an illustrated embodiment thereof, will be more fully understood from the following description and drawings.

### BRIEF DESCRIPTION OF THE SEVERAL VIEWS OF THE DRAWINGS

Fig.1 is a block diagram of an ADSL modem system that may be used in connection with the present invention.
Fig. 2 illustrates additional detail of one embodiment of the ADSL modem system of Fig. 1.
Fig. 3 illustrates one embodiment of a PMS-TC Layer architecture that may be used in connection with the present invention.
Fig. 4 illustrates one embodiment of the present invention where a multiple of 8 is selected under certain conditions.
Fig. 5 illustrates another embodiment of the present invention where a multiple of 4 is selected.
Figure 6 illustrates a further embodiment where a multiple of 2 is selected.
Fig. 7 illustrates additional detail regarding one embodiment of the invention discussed with reference to Fig. 4.
Fig. 8 illustrates another embodiment of the present invention where the transmitter sends a message to the remote receiver to choose a symbol size that is a multiple of 4.
Figure 9 illustrates a further embodiment of the present invention where the transmitter sends a message to the remote receiver to choose a symbol size that is a multiple of 2.

### DETAILED DESCRIPTION OF THE INVENTION

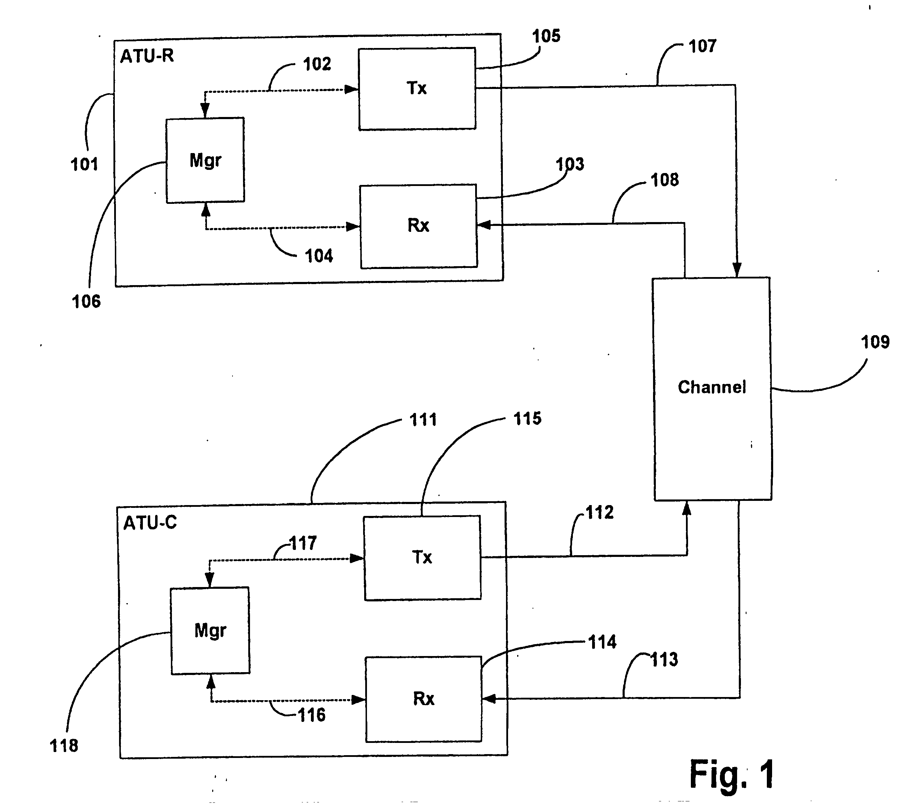

Fig.1 is a block diagram of an ADSL modem system that may be used in connection with the present invention. The system comprises a customer premises modem (ATU-R) 101, a central office modem (ATU-C) 111, and a channel 109 that communicatively couples the modems 101 and 111. The modem 101 comprises a transmitter 105, a receiver 103 and a manager 106. The manager 106 may comprise, for example, a microprocessor. The modem 101 is communicatively coupled to the channel 109 via communication links 107 and 108.

Similarly, modem 111 comprises a transmitter 115, a receiver 114 and a manager 118. The manager 118 similarly may comprise, for example, a microprocessor. The modem 111 is likewise communicatively coupled to the channel 109 via communication links 112 and 113.

During modem training the customer premises modem (ATU-R) 101 estimates the maximum receive data rate. More specifically, for example, the receiver 103, via control path 104, informs the manager 106 about the training signal received. The manager 106 of the customer premises modem (ATU-R) 101 then estimates the maximum rate at which the central office modem (ATU-C) 111 can reliably transmit data to the customer premises modem (ATU-R) 101. The manager 106 compares this maximum receive data rate to a threshold, TR (for example). Depending upon the result of that comparison the manager 106 instructs the transmitter 105 via control path 102 to transmit a command, CR (for example), to the central office modem (ATU-C) 111. Command CR may have one of four possible values corresponding to whether the number of bits per symbol transmitted by the central office modem (ATU-C) 111 during SHOWTIME should be a multiple of 8, 4, 2, or 1. Command CR may be, for example, encoded by circuits and processes in the transmitter 105, which generates a corresponding signal, SR (for example), that is transmitted to the channel 109 via the communication link 107. Signal SR is further conveyed to the receiver 114 of the central office modem (ATU-C) 111 via the connection 113. The receiver 114 processes the received signal SR, decodes command CR and transfers it to the manager 115 via control path 116. The manager 118 then configures the transmitter 115 to transmit a number of bits per symbol during SHOWTIME that is a multiple of 8, 4, 2, or 1, depending upon the value of command CR.

The same or similar process may work in the opposite direction. More particularly, during modem training the central office modem (ATU-C) 111 estimates the maximum receiver data rate. For example, the manager 118 of the central office modem (ATU-C) 111 analyzes the training signal received by the receiver 114 via the control path 116 and estimates the maximum rate at which the customer premises modem (ATU-R) 101 can reliably transmit data to the central office modem (ATU-C) 111. The manager 118 compares this maximum receive data rate to a threshold, TC. Depending upon the result of that comparison the manager 118 instructs the transmitter 115 via control path 117 to transmit a command, CC (for example), to the customer premises modem (ATU-R) 101. Command CC may have one of four possible values corresponding to whether the number of bits per symbol transmitted by the customer premises modem (ATU-R) 101 during SHOWTIME should be a multiple of 8, 4, 2, or 1. Command CC may be, for example, encoded by circuits and processes in the transmitter 115, which generates a corresponding signal SC (for example) that is transmitted to the channel 109 via communication link 112. Signal SC is further conveyed to the receiver 103 of the customer premises modem (ATU-R) 101 via the communication link 108. The receiver 103 processes the received signal SC, decodes command CC and transfers it to the manager 106 via control path 104. The manager 106 then configures the transmitter 105 to transmit a number of bits per symbol during SHOWTIME that is a multiple of 8, 4, 2, or 1, depending upon the value of the command, CC.

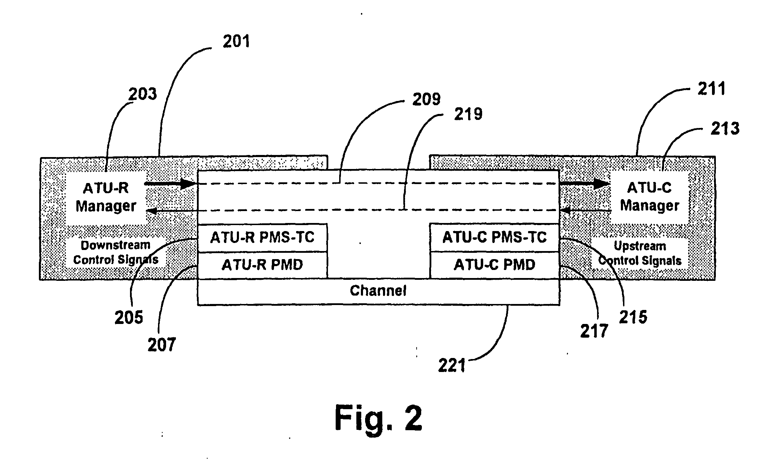

Fig. 2 illustrates additional detail of one embodiment of the ADSL modem system of Fig. 1. The embodiment of Fig. 2 comprises a customer premises modem (ATU-R) 201, a central office modem (ATU-C) 211, and a channel 221 communicatively coupling the modems 201 and 211. The customer premises modem (ATU-R) 201 and the central office modem (ATU-C) 211 contain entities ATU-R manager 203 and ATU-C manager 213, respectively. These managers correspond, respectively, to manager 106 and manager 118 in Fig. 1. Fig. 2 illustrates that, while there is no direct connection between ATU-R manager 203 and ATU-C manager 213, a virtual connection exists via paths 209 and 219. Physically, path 209 is implemented in the form of commands that originate in the customer premises modem (ATU-R) 201 manager 203 in the form of data bits and are communicated to ATU-R PMS-TC (Physical Media-Specific-Transmit Convergence) layer 205 of the customer premises modem (ATU-R) 201. Next the commands pass to ATU-R PMD (Physical Medial-Dependent) layer 207 of the customer premises modem (ATU-R) 201, where they are converted to electrical signals. Those signals pass through channel 221 to the ATU-C PMD layer 217 of the central office modem (ATU-C) 211, where they are converted back to data bits. They then pass to ATU-C PMS-TC layer 915 of the central office modem (ATU-C) 211 and then to the ATU-C manager 213.

It should be understood that exactly the same process may work in the reverse direction.

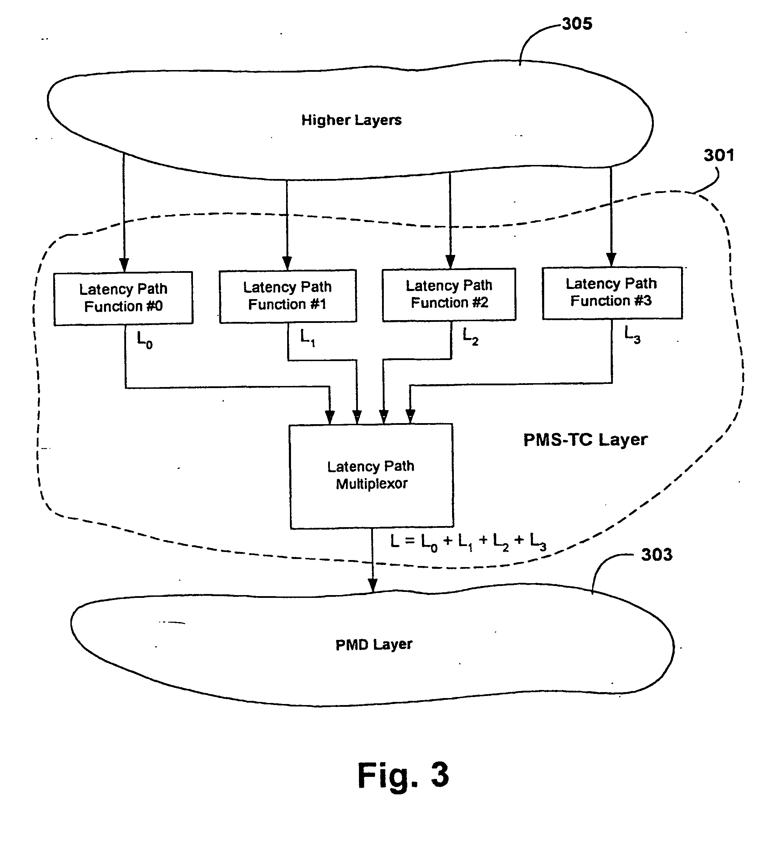

Fig. 3 illustrates one embodiment of a PMS-TC Layer architecture that may be used in connection with the present invention. Fig. 1 shows some detail regarding PMS-TC Layer 301, which lies above PMD symbol layer 303 and below higher layers 305. In one embodiment of the present invention, the ATU-C transmitter, during initialization, may selectively force the L = 8n and/or the Lp = 8*nₚ condition on its own initiative. In other words, the ATU-C transmitter (i.e., central office modem transmitter), during initialization, may communicate to the remote ATU-R receiver (i.e., customer premises modem receiver) the restriction that the ATU-C transmitter requires the values of L and Lₚ (Fig. 3) to be multiples of 8. Alternatively, the ATU-C transmitter may also restrict L to be multiples of 4 or 2 (i.e., selectively force the options L = 4n and/or Lₚ = 4*nₚ, or L = 2n and/or Lₚ = 2*nₚ). Of course, the same procedure may be used in the opposite direction, but in such case, the threshold would be different.

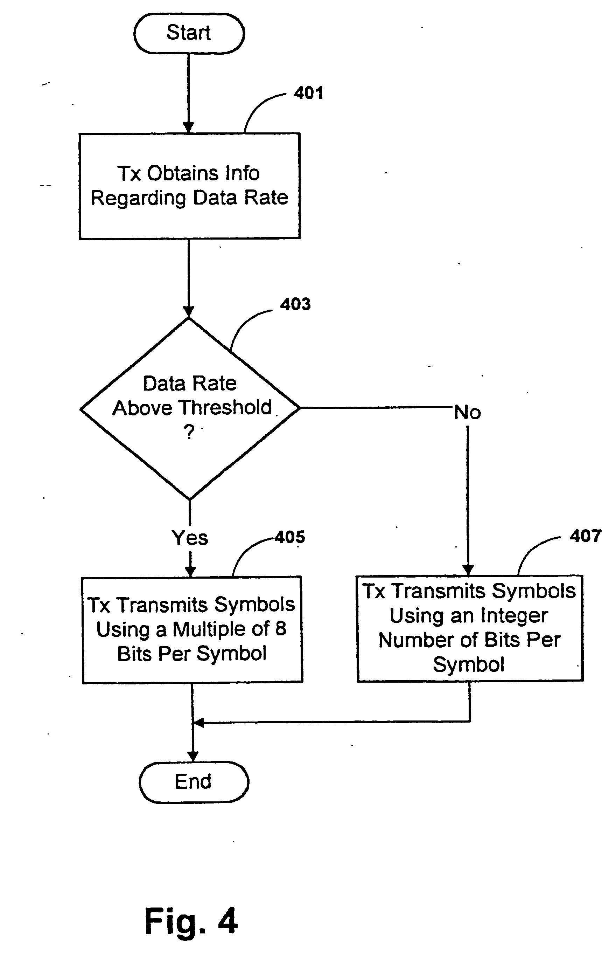

Fig. 4 illustrates one embodiment of the present invention where a multiple of 8 is selected under certain conditions. More specifically, during initialization, the data rate is being estimated, and the ATU-C transmitter obtains information regarding the data rate (block 401). If it is determined that the data rate is high, (i.e., above a certain threshold - block 403), the transmitter transmits symbols using a multiple of 8 number of bits per symbol (block 405). If, however the data rate is determined to be low (i.e., below the threshold - block 403), the transmitter transmits symbols using an integer number of bits per symbol (block 407). For an 8n system such as shown in Fig. 4, the threshold used may be, for example, 1 Mbits per second, and can be manufacturer specific. The determination at block 403 may be made by, for example, the transmitter itself, or alternatively by the remote receiver. Of course, the same procedure may be used in the opposite direction, but in such case, the threshold would be different (e.g., 250 Kbits per second).

Fig. 5 illustrates another embodiment of the present invention where a multiple of 4 is selected, rather than a multiple of 8. More specifically, during initialization, the data rate is being estimated, and the ATU-C transmitter obtains information regarding the data rate (block 501). If it is determined that the data rate is high, (i.e., above a certain threshold - block 503), the transmitter transmits symbols using a multiple of 4 number of bits per symbol (block 505). If, however the data rate is determined to be low (i.e., below the threshold - block 503), the transmitter transmits symbols using an integer number of bits per symbol (block 507). For a 4n system such as shown in Fig. 5, the threshold used may be different than that of Fig. 4, such as, for example, 2 Mbits per second. Of course, the same procedure may be used in the opposite direction, but in such case, the threshold would be different (e.g., 500 Kbits per second).

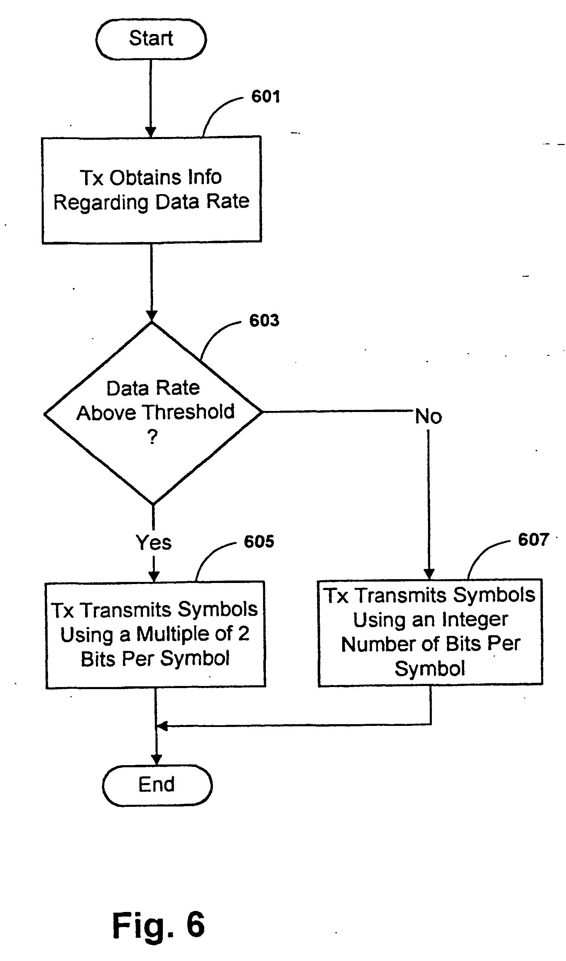

Likewise, Figure 6 illustrates a further embodiment where a multiple of 2 is selected, rather than a multiple of 4 or 8. More specifically, during initialization, the data rate is being estimated, and the ATU-C transmitter obtains information regarding the data rate (block 601). If it is determined that the data rate is high, (i.e., above a certain threshold - block 603), the transmitter transmits symbols using a multiple of 2 number of bits per symbol (block 605). If, however the data rate is determined to be low (i.e., below the threshold - block 603), the transmitter transmits symbols using an integer number of bits per symbol (block 607). For a 2n system such as shown in Fig. 6, the threshold used may be different than that of either Figs. 4 or 5, such as, for example, 3 Mbits per second. Of course, the same procedure may be used in the opposite direction, but in such case, the threshold would be different (e.g., 750 Kbits per second).

As is apparent from Figs. 5 and 6, each of these embodiments is similar in all respects to that discussed above with respect to Fig. 4, except that a different number multiple is transmitted if the estimated data rate is determined to be above the threshold. Similarly, in either case, the threshold chosen can again be manufacturer specific.

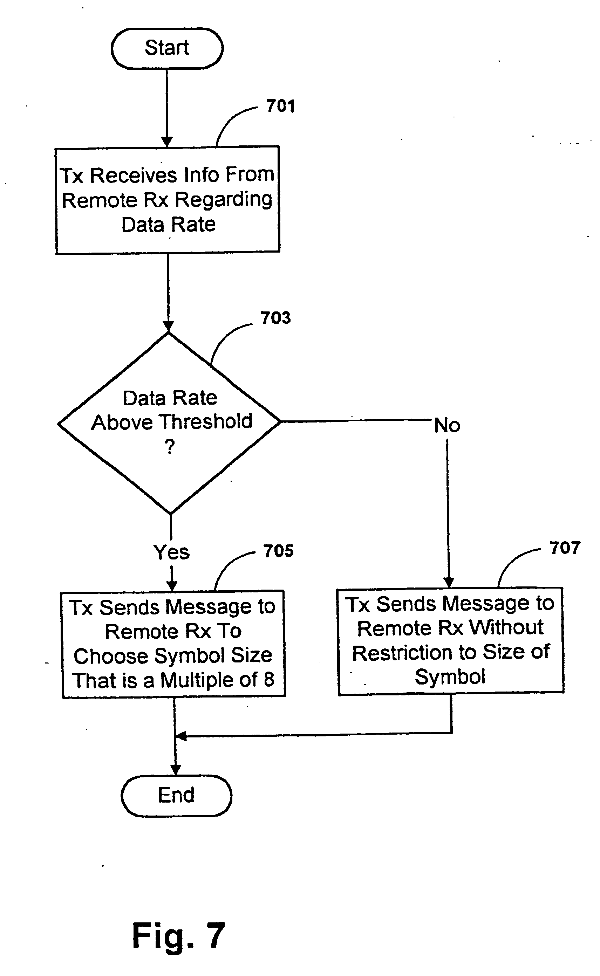

Fig. 7 illustrates additional detail regarding one embodiment of the invention discussed above with respect to Fig. 4. During initialization, the transmitter receives information from the remote receiver regarding the estimated data rate (block 701). A determination is then made whether the data rate is above a threshold (block 703). The threshold may again be, for example, approximately 1 Mbits per second (or alternatively approximately 250 Kbits per second), as discussed above. In addition, this determination may again be made by the transmitter itself or by the remote receiver, as mentioned above.

In any case, if the data rate is determined to be high (i.e., above the threshold), the transmitter sends a message to the remote receiver to choose a symbol size that is a multiple of 8 (block 705). This message may simply be in the form of a logical "01," for example. If the data rate is determined to be low (i.e., below the threshold), the transmitter sends a message to the remote receiver without restriction to the size of the symbol (block 707). This latter message may simply be in the form of a logical "00," for example. In other words, when the data rate is below the threshold, the transmitter does not force the remote receiver to choose a multiple of 8 number of bits per symbol, and thus the remote receiver is permitted to use any integer number of bits per symbol.

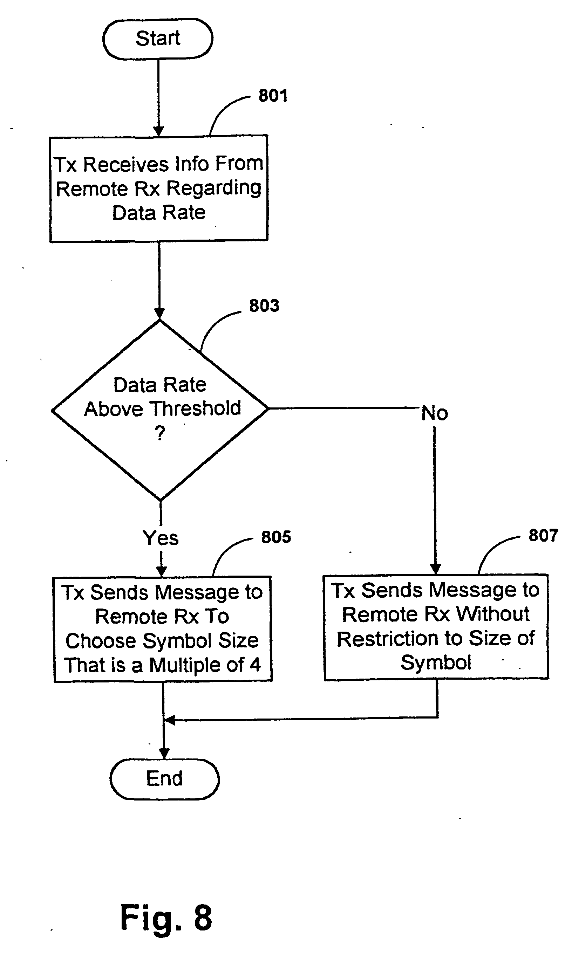

Fig. 8 illustrates another embodiment of the present invention where the transmitter sends a message to the remote receiver to choose a symbol size that is a multiple of 4, rather than a multiple of 8. During initialization, the transmitter receives information from the remote receiver regarding the estimated data rate (block 801). A determination is then made whether the data rate is above a threshold (block 803). The threshold may again be, for example, 2 Mbits per second (or alternatively approximately 500 Kbits per second), as discussed above. In addition, this determination may again be made by the transmitter itself or by the remote receiver, as mentioned above.

In any case, if the data rate is determined to be high (i.e., above the threshold), the transmitter sends a message to the remote receiver to choose a symbol size that is a multiple of 4 (block 805). This message may simply be in the form of a logical "10," for example. If the data rate is determined to be low (i.e., below the threshold), the transmitter sends a message to the remote receiver without restriction to the size of the symbol (block 807). Again, this latter message may simply be in the form of a logical "00," for example. In other words, when the data rate is below the threshold, the transmitter does not force the remote receiver to choose a multiple of 4 number of bits per symbol, and thus the remote receiver is permitted to use any integer number of bits per symbol.

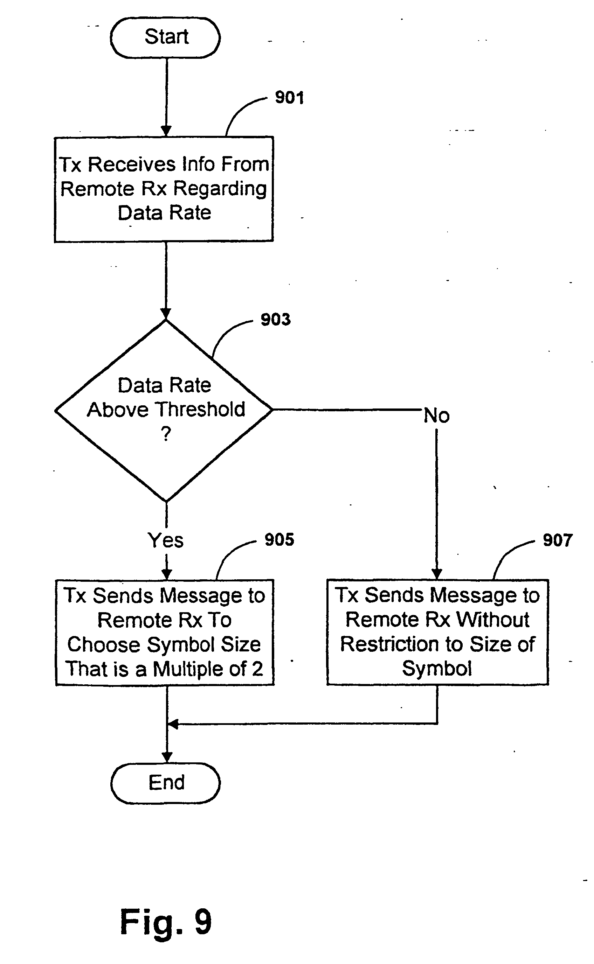

Likewise, Figure 9 illustrates a further embodiment of the present invention where the transmitter sends a message to the remote receiver to choose a symbol size that is a multiple of 2, rather than a multiple of 8 or 4. During initialization, the transmitter receives information from the remote receiver regarding the estimated data rate (block 801). A determination is then made whether the data rate is above a threshold (block 803). The threshold may again be, for example, 3 Mbits per second (or alternatively approximately 750 Kbits per second), as discussed above. In addition, this determination may again be made by the transmitter itself or by the remote receiver, as mentioned above.

In any case, if the data rate is determined to be high (i.e., above the threshold), the transmitter sends a message to the remote receiver to choose a symbol size that is a multiple of 2 (block 905). This message may simply be in the form of a logical "11," for example. If the data rate is determined to be low (i.e., below the threshold), the transmitter sends a message to the remote receiver without restriction to the size of the symbol (block 907). As mentioned above, this latter message may simply be in the form of a logical "00," for example. In other words, when the data rate is below the threshold, the transmitter does not force the remote receiver to choose a multiple of 2 number of bits per symbol, and thus the remote receiver is permitted to use any integer number of bits per symbol.

Each of the embodiments of Figs. 8 and 9 is similar in all respects to that discussed above with respect to Fig. 7, except that a message to choose a different symbol size is sent if the estimated data rate is determined to be above the threshold. Again, different thresholds may be used for a 4n or 2n system, as discussed above, and the threshold used can again be manufacturer specific.

As is apparent from the above, in one aspect of the present invention, a command is defined and used during initialization to enable an ADSL transmitter to instruct its remote receiver counterpart to ask for byte-oriented processing. The transmitter makes this decision based on, for example, details of the manufacturer's implementation and on the estimate of line speed achievable during the connection session.

Employing the invention permits a manufacturer to trade the dollar cost of implementing high-speed bit-oriented data transmission against a reduction in wasted channel capacity. As mentioned above, the worst-case wasted capacity is constant (28000 bit/s in the straightforward example). This reduction represents a small percentage of high speeds and a large percentage of low speeds. The boundary between "high" and "low" may be manufacturer-dependent. Intelligent use of the invention calls for requesting byte-oriented processing at high speeds, where efficiency is important. At low speeds, again depending upon a manufacturer's implementation, extra signal processing resources may be available to perform the necessary bit-oriented processing, so the request for byte-oriented processing is not necessary. Somewhere between "high" and "low," a threshold is defined, above which one is willing to pay the speed penalty and below which one has sufficient reserve processing capability to do the required bit-oriented processing in order to avoid the speed penalty.

Many modifications and variations of the present invention are possible in light of the above teachings. Thus, it is to be understood that, within the scope of the appended claims, the invention may be practiced otherwise than as described hereinabove.

What is claimed and desired to be secured by Letters Patent is:

## Claims

1. A method of restricting symbol size in an ADSL system comprising:
obtaining information regarding the data rate during initialization;
comparing the information to a threshold;
**characterized by**
transmitting a message to choose a symbol size that is one of a multiple of 8, 4 or 2 bits per symbol if the information is above the threshold; and
transmitting a message without restriction as to the size of symbols if the information is.below the threshold.

2. The method of claim 1 wherein the information is obtained from a remote location.

3. The method of claim 1 wherein the information regarding the data rate comprises an estimated maximum receive data rate.

4. The method of claim 1 wherein the threshold is one of approximately 1 Mbits per second or approximately 250 Kbits per second, and wherein the message is transmitted to choose a symbol size that is multiple of 8 if the information is above the threshold.

5. The method of claim 1 wherein the threshold is one of approximately 2 Mbits per second or approximately 500 Kbits per second, and wherein the message is transmitted to choose a symbol size that is multiple of 4 if the information is above the threshold.

6. The system of claim 1 wherein the threshold is one of approximately 3 Mbits per second or approximately 750 Kbits per second, and wherein the message is transmitted to choose a symbol size that is multiple of 2 if the information is above the threshold.

7. An ADSL modem system comprising:
a first modem (111, 211) having a first transmitter (115) and a first receiver (114);
a second modem (101, 201) having a second transmitter (105) and a second receiver (103), the second modem (101, 201) estimating a maximum transmit data rate of the first modem (111, 211) and comparing it to a threshold,
**characterized by**
the second transmitter (105) transmitting a message to the first receiver (114) that instructs the first transmitter (115) to transmit data using a pre-selected number of bits per symbol based on the comparison,
the pre-selected number of bits per symbol is one of a multiple of 8, 4 or 2, if the data rate is above said threshold, and
the pre-selected number of bits per symbol is without restrictions, if the data rate is below said threshold.

8. The ADSL modem system of claim 7 wherein the threshold is one of approximately 1 Mbits per second or approximately 250 Kbits per second, and wherein the pre-selected number of bits per symbol is 8 if the maximum receive data rate is above the threshold.

9. The ADSL modem system of claim 7 wherein the threshold is one of approximately 2 Mbits per second or approximately 500 Kbits per second, and wherein the pre-selected number of bits per symbol is 4 if the maximum receive data rate is above the threshold.

10. The ADSL modem system of claim 7 wherein the threshold is one of approximately 3 Mbits per second or approximately 750 Kbits per second, and wherein the pre-selected number of bits per symbol is 2 if the maximum receive data rate is above the threshold.

11. The ADSL modem system of claim 7 wherein the second receiver (103) receives a training signal that is used to estimate the maximum transmit data rate of the first modem (111, 211).

12. The ADSL modem system of claim 7 wherein the second modem (101, 201) further has a manager (106, 203) that estimates the maximum transmit data rate of the first modem (111, 211) and compares the estimated maximum transmit data rate to the threshold, and
wherein the first modem (111, 211) has a manager (118, 213) that configures the first transmitter (115) to transmit data using the pre-selected number of bits per symbol based on the comparison.

## Revendications

1. Procédé pour limiter la longueur de symbole dans un système ADSL comprenant :
l'obtention d'informations relatives au débit de données lors de l'initialisation;
la comparaison des informations avec un seuil ;
**caractérisé par**
la transmission d'un message pour choisir une longueur de symbole qui est l'un d'un multiple de 8, 4 ou 2 bits par symbole si les informations sont supérieures au seuil, et
la transmission d'un message sans limitation quant à la longueur des symboles si les informations sont inférieures au seuil.

2. Procédé selon la revendication 1, dans lequel les informations sont obtenues à partir d'un emplacement à distance.

3. Procédé selon la revendication 1, dans lequel les informations relatives au débit de données comprennent un débit de données de réception maximum estimé.

4. Procédé selon la revendication 1, dans lequel le seuil est l'un d'environ 1 Mbits par seconde ou d'environ 250 Kbits par seconde, et dans lequel le message est transmis pour choisir une longueur de symbole qui est un multiple de 8 si les informations sont supérieures au seuil.

5. Procédé selon la revendication 1, dans lequel le seuil est l'un d'environ 2 Mbits par seconde ou d'environ 500 Kbits par seconde, et dans lequel le message est transmis pour choisir une longueur de symbole qui est un multiple de 4 si les informations sont supérieures au seuil.

6. Système selon la revendication 1, dans lequel le seuil est l'un d'environ 3 Mbits par seconde ou d'environ 750 Kbits par seconde, et dans lequel le message est transmis pour choisir une longueur de symbole qui est un multiple de 2 si les informations sont supérieures au seuil.

7. Système de modem ADSL comprenant :
un premier modem (111, 211) comprenant un premier émetteur (115) et un premier récepteur (114) ;
un second modem (101, 201) comprenant un second émetteur (105) et un second récepteur (103), le second modem (101, 201) estimant un débit de données de transmission maximum du premier modem (111,211) et le comparant à un seuil,
**caractérisé par**
le second émetteur (105) transmettant un message au premier récepteur (114) qui commande le premier émetteur (115) pour transmettre des données en utilisant un nombre pré-sélectionné de bits par symbole en se basant sur la comparaison ;
le nombre pré-sélectionné de bits par symbole est l'un d'un multiple de 8, 4 ou 2, si le débit de données est supérieur audit seuil, et
le nombre pré-sélectionné de bits par symbole est sans limitations, si le débit de données est inférieur audit seuil.

8. Système de modem ADSL selon la revendication 7, dans lequel le seuil est l'un d'environ 1 Mbits par seconde ou d'environ 250 Kbits par seconde, et dans lequel le nombre pré-sélectionné de bits par symbole est de 8 si le débit de données de réception maximum est supérieur au seuil.

9. Système de modem ADSL selon la revendication 7, dans lequel le seuil est l'un d'environ 2 Mbits par seconde ou d'environ 500 Kbits par seconde, et dans lequel le nombre pré-sélectionné de bits par symbole est de 4 si le débit de données de réception maximum est supérieur au seuil.

10. Système de modem ADSL selon la revendication 7, dans lequel le seuil est l'un d'environ 3 Mbits par seconde ou d'environ 750 Kbits par seconde, et dans lequel le nombre pré-sélectionné de bits par symbole est de 2 si le débit de données de réception maximum est supérieur au seuil.

11. Système de modem ADSL selon la revendication 7, dans lequel le second récepteur (103) reçoit un signal d'apprentissage qui est utilisé pour estimer le débit de données de transmission maximum du premier modem (111, 211).

12. Système de modem ADSL selon la revendication 7, dans lequel le second modem (101, 201) comprend en outre un gestionnaire (106, 203) qui estime le débit de données de transmission maximum du premier modem (111, 211) et compare le débit de données de transmission maximum estimé avec le seuil, et
dans lequel le premier modem (111, 211) comprend un gestionnaire (118, 213) qui configure le premier émetteur (115) pour transmettre des données en utilisant le nombre pré-sélectionné de bits par symbole en se basant sur la comparaison.

## Patentansprüche

1. Verfahren zum Einschränken der Symbolgröße in einem ADSL-System, das umfasst:
das Erhalten von Informationen betreffend die Datenrate während der Initialisierung,
das Vergleichen der Informationen mit einem Schwellwert,
**gekennzeichnet durch**
das Senden einer Nachricht, um eine Symbolgröße zu wählen, die ein Vielfaches von 8, 4 oder 2 Bit pro Symbol beträgt, wenn die Informationen über dem Schwellwert liegen, und
das Senden einer Nachricht ohne Einschränkung hinsichtlich der Größe der Symbole, wenn die Informationen unter dem Schwellwert liegen.

2. Verfahren nach Anspruch 1,
wobei die Informationen von einem entfernten Ort erhalten werden.

3. Verfahren nach Anspruch 1,
wobei die die Datenrate betreffenden Informationen eine geschätzte maximale Datenempfangsrate umfassen.

4. Verfahren nach Anspruch 1,
wobei der Schwellwert ungefähr 1 MBit pro Sekunde oder ungefähr 250 KBit pro Sekunde beträgt und wobei die Nachricht gesendet wird, um eine Symbolgröße zu wählen, die ein Vielfaches von 8 beträgt, wenn die Informationen über dem Schwellwert liegen.

5. Verfahren nach Anspruch 1,
wobei der Schwellwert ungefähr 2 MBit pro Sekunde oder ungefähr 500 KBit pro Sekunde beträgt und wobei die Nachricht gesendet wird, um eine Symbolgröße zu wählen, die ein Vielfaches von 4 beträgt, wenn die Informationen über dem Schwellwert liegen.

6. System nach Anspruch 1,
wobei der Schwellwert ungefähr 3 MBit pro Sekunde oder ungefähr 750 KBit pro Sekunde beträgt und wobei die Nachricht gesendet wird, um eine Symbolgröße zu wählen, die ein Vielfaches von 2 beträgt, wenn die Informationen über dem Schwellwert liegen.

7. ADSL-Modemsystem mit:
einem ersten Modem (111, 211), das einen ersten Sender (115) und einen ersten Empfänger (114) aufweist,
einem zweiten Modem (101, 201), das einen zweiten Sender (105) und einen zweiten Empfänger (103) aufweist, wobei das zweite Modem (101, 201) eine maximale Datensenderate des ersten Modems (111, 211) schätzt und diese mit einem Schwellwert vergleicht,
**dadurch gekennzeichnet, dass**
der zweite Sender (105) eine Nachricht an den ersten Empfänger (114) sendet, die den ersten Sender (115) anweist, unter Verwendung einer vorab gewählten Anzahl an Bits pro Symbol, die auf dem Vergleich basiert, Daten zu senden,
die vorab gewählte Anzahl an Bits pro Symbol ein Vielfaches von 8, 4 oder 2 beträgt, wenn die Datenrate über dem Schwellwert liegt, und
die vorab gewählte Anzahl an Bits pro Symbol nicht eingeschränkt ist, wenn die Datenrate unter dem Schwellwert liegt.

8. ADSL-Modemsystem nach Anspruch 7,
wobei der Schwellwert ungefähr 1 MBit pro Sekunde oder ungefähr 250 KBit pro Sekunde beträgt und wobei die vorab gewählte Anzahl an Bits pro Symbol 8 beträgt, wenn die maximale Datenempfangsrate über dem Schwellwert liegt.

9. ADSL-Modemsystem nach Anspruch 7,
wobei der Schwellwert ungefähr 2 MBit pro Sekunde oder ungefähr 500 KBit pro Sekunde beträgt und wobei die vorab gewählte Anzahl an Bits pro Symbol 4 beträgt, wenn die maximale Datenempfangsrate über dem Schwellwert liegt.

10. ADSL-Modemsystem nach Anspruch 7,
wobei der Schwellwert ungefähr 3 MBit pro Sekunde oder ungefähr 750 KBit pro Sekunde beträgt und wobei die vorab gesendete Anzahl an Bits pro Symbol 2 beträgt, wenn die maximale Datenempfangsrate über dem Schwellwert liegt.

11. ADSL-Modemsystem nach Anspruch 7,
wobei der zweite Empfänger (103) ein Trainingssignal empfängt, das dafür verwendet wird, die maximale Datensenderate des ersten Modems (111, 211) zu schätzen.

12. ADSL-Modemsystem nach Anspruch 7,
wobei das zweite Modem (101, 201) ferner einen Manager (106, 203) aufweist, der die maximale Datensenderate des ersten Modems (111, 211) schätzt und die geschätzte maximale Datensenderate mit dem Schwellwert vergleicht, und
wobei das erste Modem (111, 211) einen Manager (118, 213) aufweist, der den ersten Sender (115) dafür konfiguriert, unter Verwendung der vorab gewählten Anzahl an Bits pro Symbol, die auf dem Vergleich basiert, Daten zu senden.
